# EUROPÄISCHE PATENTSCHRIFT

(11) **EP 1 676 203 B1**
(45) Veröffentlichungstag und Bekanntmachung des Hinweises auf die Patenterteilung: **21.12.2011**
(21) Anmeldenummer: 04766656.5
(22) Anmeldetag: 31.08.2004
(51) Int. Cl.: G06F 12/02, G06F 3/06, G11C 16/06

(54) **VERFAHREN ZUM SCHREIBEN VON SPEICHERSEKTOREN IN EINEM BLOCKWEISE LÖSCHBAREN SPEICHER**
METHOD FOR WRITING MEMORY SECTORS IN A MEMORY DELETABLE BY BLOCKS
PROCEDE POUR ECRIRE DANS DES SECTEURS D'UNE MEMOIRE EFFACABLE PAR BLOC

(30) Priorität: 24.10.2003 DE 10349595
(43) Veröffentlichungstag der Anmeldung: 05.07.2006
(73) Patentinhaber: Hyperstone GmbH, 78467 Konstanz (DE)
(72) Erfinder: KÜHNE, Reinhard, 78479 Reichenau (DE)
(74) Vertreter: Hanewinkel, Lorenz
(86) Internationale Anmeldenummer: PCT/EP2004/051975
(87) Internationale Veröffentlichungsnummer: WO 2005/041046

(56) Entgegenhaltungen:
- WO-A-00/49488
- WO-A-99/18509
- DE-C1- 10 227 256
- GB-A- 2 349 242
- US-A- 5 835 935
- US-A1- 2003 065 899

## Beschreibung

Die Erfindung beschreibt ein Verfahren zum Schreiben von Speichersektoren in einzeln löschbaren Speicherblöcken, die eine Vielzahl von Speichersektoren enthalten, wobei auf die realen Sektoren jeweils mittels einer Zuordnertabelle zur Adressumsetzung von einer logischen Adresse in eine reale Blockadresse und eine reale Sektoradresse zugegriffen wird, und wobei jeweils, wenn ein Sektorschreibbefehl auszuführen wäre, der einen bereits beschriebenen Sektor betrifft, durch eine geänderte Adressumsetzung in einen Ausweichspeicherblock geschrieben wird.

Die weit verbreiteten nichtflüchtigen Halbleiterspeicher (Flashspeicher) sind in Blöcken und diese wiederum in Sektoren organisiert, wobei ein Block z.B. aus 256 Sektoren mit je 512 Bytes besteht. Die Speicher besitzen die Eigenschaft, dass neue Informationen nur sektorweise in vorher gelöschte Sektoren geschrieben werden können. Das Löschen erfolgt jeweils für einen Block für alle Sektoren gemeinsam. Das Schreiben eines Sektors in den Speicher dauert länger als das Lesen und eine Löschoperation eines Blockes erfordert eine lange Zeit, z.B. mehrere Millisekunden.

In der Patentanmeldung DE 102 27 256.5 ist ein Verfahren beschrieben, wie zum Schreiben eines Sektors ein Ausweichblock gesucht wird und die neue Information in dessen Sektoren geschrieben wird. Dabei wird in einer Bitliste als Sektormaske vermerkt, welche Sektoren neu in den jeweiligen Ausweichblock geschrieben wurden. Falls nun ein Sektor ein zweites Mal beschrieben werden muss, wird ein neuer Ausweichblock gesucht und in diesen geschrieben. Dieses Verfahren hat den Nachteil, dass auch nach nur wenigen Schreibvorgängen in einen Ausweichblock ein neuer Ausweichblock gesucht und Sektoren umkopiert werden müssen.
Weiterhin besitzen neuere Speicherchips die Eigenschaft, dass die Sektoren innerhalb eines Blocks nur sequentiell aufsteigend beschrieben werden können. Wenn also nicht nacheinanderliegende Sektoren beschrieben werden sollen, muss auch ein neuer Ausweichblock gesucht und schon beschriebene Sektoren kopiert werden.
Die Kopiervorgänge stellen relativ langsame Schreibvorgänge dar, welche die Geschwindigkeit des Speichersystems beeinträchtigen. Aus dem US-Patent 5,835,935 ist bekannt, bei Schreibanforderungen jeweils den nächsten freien Sektor in einem Block zu nutzen. Damit werden die Blöcke zwar sequentiell beschrieben, aber es wird jeweils die Zuordnungstabelle zwischen logischer und physikalischer Sektoradresse angepasst, was jeweils einen weiteren Schreibvorgang erfordert.
Auch aus der internationalen Anmeldung WO 99/18509 sind Verfahren bekannt, wie durch Nutzung von Ausweichblöcken und deren Verwaltung über Zuordnertabellen das Schreiben von Sektoren gestaltet werden kann. Bei den hier beschriebenen Verfahren muss aber jeweils ein neuer Ausweichblock genutzt werden, falls ein Sektor eines Blockes ein weiteres Mal verändert werden soll. Die Sektoren werden immer entsprechend ihrer Sektoradresse in die Blöcke geschrieben.
Aus der internationalen Anmeldung WO 00/49488 ist bekannt, für sequentielle Dateien und für Systemdateien verschiedene Schreibverfahren einzusetzen. Hier werden aber für beide Arten von Dateien separate Listen im Speichercontroller gerührt, in denen festgehalten wird, in welche physikalischen Adressen die Userdaten geschrieben wurden.

In der Patentanmeldung US2003/005899A1 ist ein Flashspeichersystem beschrieben, bei dem mehrere Schreibzeiger für verschiedene Arten von Dateien genutzt werden, damit sich die Dateien möglichst wenig in den physikalischen Blöcken überlappen.

In der Patentanmeldung GB 2 349 242 A ist ein Verfahren zum Überschreiben von Dateien offenbart, bei dem jeweils, wenn ein Sektor ein weiteres Mal verändert werden soll, ein leerer Block gesucht und beschrieben werden muss.

Es ist Aufgabe der Erfindung, ein Verfahren zu offenbaren, das die beschriebenen Nachteile vermeidet und die Geschwindigkeit des Speichersystems verbessert.

Gelöst wird diese Aufgabe dadurch, dass die Schreibvorgänge von Sektoren in den Ausweichspeicherblock sequentiell erfolgen und die Position des jeweiligen Sektors im Ausweichblock in einer Sektortabelle gespeichert wird.

Vorteilhafte Ausführungsformen sind in den Unteransprüchen angegeben.

Beim Schreiben eines Sektors wird dieser durch eine logische Adresse adressiert. Diese Adresse kann in eine logische Sektoradresse und eine logische Blockadresse aufgespaltet werden. Das Speichersystem ist in reale Speicherblöcke, die zusammen gelöscht werden können, und in reale Sektoren, die einzeln beschrieben werden können, organisiert. In einer Zuordnertabelle werden die logischen Blockadressen realen Speicherblockadressen zugeordnet. Die logischen Sektoradressen werden ohne eine Adressumsetzung direkt als reale Sektoradressen genutzt. Einige Speicherblöcke sind als Ausweichblöcke reserviert, die bei den Schreiboperationen genutzt werden können. Für den jeweils zu beschreibenden Speicherblock wird ein Ausweichblock zugeordnet und im internen Merkspeicher des zum Speichersystem gehörenden Speichercontrollers werden die Adressen der Ausweichblöcke und die zugehörigen Listen geführt, in welche Sektoren geschrieben wurde. Nun ist es vorteilhaft, die geänderten Sektoren eines Blockes sequentiell in den zugehörigen Ausweichblock zu schreiben und die Liste als Sektortabelle zu führen die angibt, in welchen Sektor des Ausweichblocks der betreffende Speichersektor geschrieben wurde.

Dabei ist die Sektortabelle in einer Ausführung als Indextabelle aufgebaut, auf die mit der realen Sektoradresse (die gleich der logischen Sektoradresse ist) zugegriffen wird. Der jeweilige Tabelleneintrag an dieser Position gibt denjenigen Sektor im Ausweichblock an, in den der entsprechende Speichersektor geschrieben wurde.

Die Indextabelle wird zu Anfang mit den höchstmöglichen Werten (FF) initialisiert. Ein solcher Wert gibt an, dass der zugehörige Sektor noch unverändert im originalen Speicherblock steht.

In einer anderen Ausführung der Sektortabelle ist diese als Suchtabelle aufgebaut, in der in jedem Tabelleneintrag die reale Sektoradresse mit der jeweiligen gültigen Sektorposition im Ausweichblock angegeben ist. Dabei ist es vorteilhaft, die Suchtabelle nach realen Sektoradressen zu ordnen, um schnell die aktuelle Position eines Speichersektors zu finden.

In beiden Ausführungen der Sektortabelle ist es günstig, die Position des Sektors im Ausweichblock auch im Verwaltungsbereich des Sektors mit zu speichern. Dadurch kann bei einem Wiederanlauf des Speichersystems die Sektortabelle aus den im Verwaltungsbereich gespeicherten Sektorpositionen im Merkspeicher des Speichercontrollers erneut aufgebaut werden. Bei einem solchen Wiederanlauf wird dann die höchste Positionsnummer des zugehörigen Sektors in die Sektortabelle übernommen.

In der Ausführung des Verfahrens ist eine typische Sektoranzahl für einen Speicherblock 256 Sektoren. In der Ausführung mit einer Indextabelle wäre dann diese 256 Byte lang. In der Ausführung mit einer Suchtabelle wäre diese dann 32 Byte lang.
Bei einer Ausführung der Tabelle mit 32 Bytes kann die Sektormaske für 256 Sektoren mit einer Suchtabelle für 16 Sektoren überlagert werden.

Durch verschiedene Schreiboperationen in einen Ausweichblock wird die zugehörige Sektortabelle gefüllt. Sobald das Ende der Sektortabelle erreicht wird, wird ein neuer Ausweichblock gesucht und in diesen die gültigen Sektoren aus dem originären Speicherblock und dem bisherigen Ausweichblock zusammenkopiert. Danach nimmt dieser Block die Stelle des originären Speicherblocks an, indem der Eintrag in der Zuordnertabelle entsprechend aktualisiert wird. Die bisherigen Speicher- und Ausweichblöcke werden zum Löschen freigegeben und dienen nach dem Löschen als neue Ausweichblöcke.

Um für den jeweiligen Speicherblock die günstigste Schreibverwaltung einzustellen, wird in der Zuordnertabelle zu jeder logischen Blockadresse ein Strategiemerker mitgeführt. Dieser Merker gibt an, ob bei Schreiboperationen zuletzt mit einer bitweisen Sektormaske oder einer byteweisen Sektortabelle gearbeitet wurde. Diese Verwaltungsart des Ausweichblocks wird auch für die nächsten Schreiboperationen beibehalten. Die Strategiemerker werden günstigerweise zunächst mit der Angabe "Sektormaske" initialisiert, da die meisten Schreiboperationen rein sequentiell ablaufen und dann die Verwaltung über eine Sektormaske am schnellsten erfolgt.

Bei Speichersystemen vom Typ "FAT-Filesystem" ist es aber vorteilhaft, die Speicherblöcke, welche die FAT enthalten, sogleich mit dem Strategiemerker "Sektortabelle" zu initialisieren, da es bei einem solchen Speichersystem zu häufigen Schreiboperationen in die gleichen Speichersektoren kommt. Damit wird die Geschwindigkeit des Speichersystems von Beginn an gesteigert.

Wird während des Betriebs des Speichersystems festgestellt, dass einzelne Speichersektoren öfter überschrieben werden, ist es günstig, die Verwaltung des Ausweichblocks von einer Sektormaske auf eine Sektortabelle umzustellen. Dabei wird dann auch der Strategiemerker in der Zuordnertabelle entsprechend nachgeführt. Gibt es keine Duplikate von Sektoren, ist es günstig, auf die Sektormaske zur Verwaltung des Speicherblockes umzustellen.

Die Ausgestaltung der Erfindung ist in den Figuren beispielhaft beschrieben.
Fig. 1 zeigt die Zuordnung der Speicherblöcke zu den logischen Adressen
Fig. 2 zeigt die Schreibverwaltung mittels einer Indextabelle
Fig. 3 zeigt die Schreibverwaltung mittels einer Suchtabelle
Fig. 4 zeigt die Zusammenfassung eines Speicherblocks mit einem Ausweichblock zu einem neuen Speicherblock

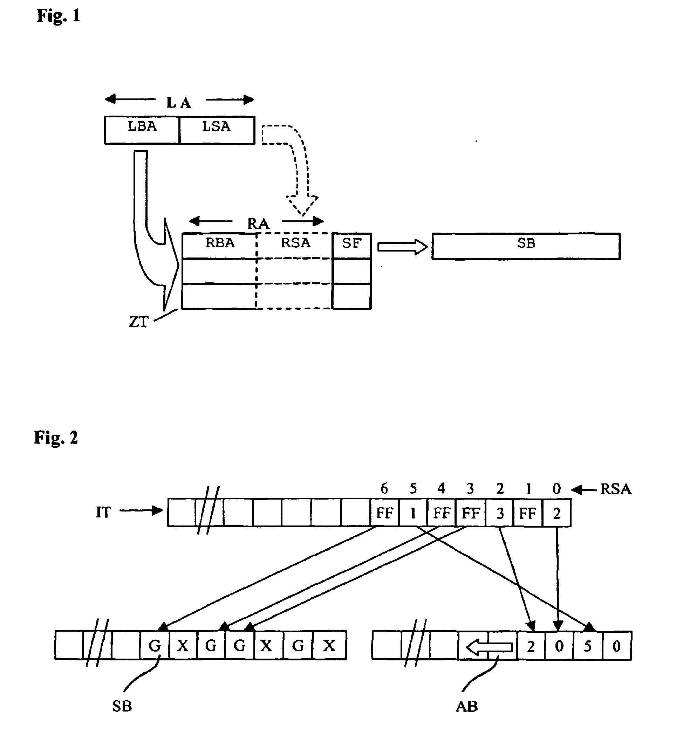

In der Fig. 1 ist die logische Adresse LA dargestellt, die sich aus der logischen Blockadresse LBA und der logischen Sektoradresse LSA zusammensetzt. Mit der logischen Blockadresse LBA wird auf die Zuordnertabelle ZT zugegriffen, in der die zugehörige reale Adresse RA gespeichert ist. Die reale Adresse RA setzt sich aus der realen Blockadresse RBA und der realen Sektoradresse RSA zusammen. Dabei wird die reale Sektoradresse RSA nicht gespeichert, da die logische Sektoradresse LSA auch als reale Sektoradresse RSA genutzt wird. Weiterhin ist in der Zuordnertabelle ZT der jeweils zu der logischen Blockadresse gehörige Strategiemerker SF gespeichert, der angibt, ob mit einer Sektormaske oder einer Sektortabelle gearbeitet wird. Die zu einer logischen Adresse LA gehörige reale Adresse RA zeigt auf einen Speicherblock SB, der für die Speicheroperation mit der logischen Adresse LA genutzt wird.

In der Fig. 2 ist ein Speicherblock SB und ein zugehöriger Ausweichblock AB gezeigt, bei dem die Speicheroperationen über eine Indextabelle IT gesteuert werden. Auf die Indextabelle IT wird über die reale Sektoradresse RSA zugegriffen. Der Tabelleneintrag gibt entweder die tatsächliche Position des zugehörigen Sektors in dem Ausweichblock AB an oder zeigt an, dass der entsprechende Sektor im Speicherblock SB noch gültig (G) ist. Dazu ist in der Indextabelle IT an diesen Positionen ein höchster Wert (FF) eingetragen. Nicht mehr gültige Sektoren, bei denen sich ein neuerer Sektorinhalt im Ausweichblock befindet, sind im Speicherblock SB mit (X) dargestellt. Im Ausweichblock AB wird sequentiell in die Sektoren geschrieben, was durch den Pfeil angedeutet ist. Es können sich mehrere Sektorinhalte zu einer logischen Sektoradresse LSA im Ausweichblock befinden. In diesem Beispiel betrifft es den Sektor 0, der an den Positionen 0 und 2 im Ausweichblock AB eingetragen ist. Die zugehörige Position 0 in der Indextabelle IT bezeichnet den gültigen Sektor. Um beim Systemanlauf die Tabelle richtig rekonstruieren zu können, wird die aufsteigende Reihenfolge der Sektoren eingehalten. Wenn beim Lesen des Ausweichblocks ein Sektor, in diesem Beispiel Sektor 0, mehrfach gefunden wird, ist der Sektor mit der höchsten Position im Block der gültige Sektor.

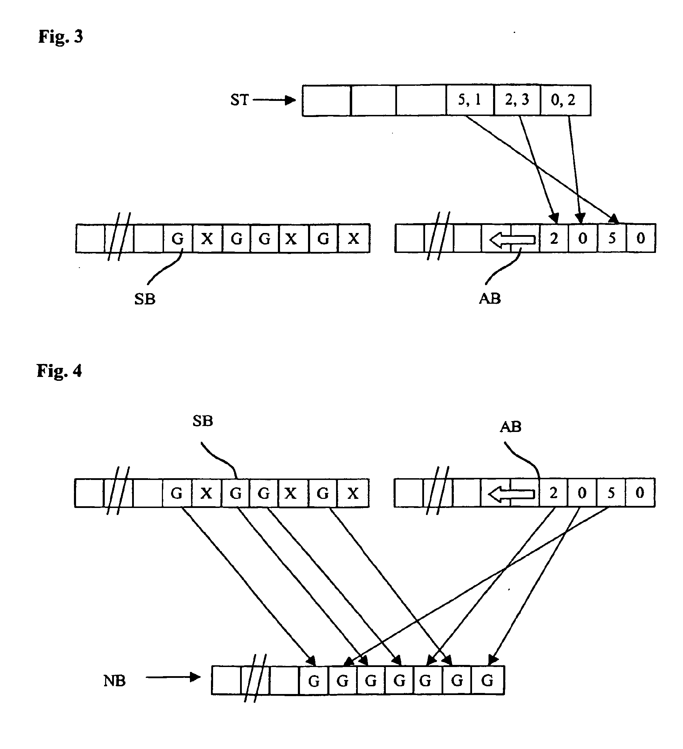

In Fig. 3 ist die gleiche Situation wie in Fig. 2 mit einer Suchtabelle ST dargestellt. Sie ist nach logischen Sektoradressen LSA geordnet, hier die Sektoren 0, 2, 5. In jedem Tabelleneintrag befindet sich zugeordnet der gültige Sektor im Ausweichblock AB. Nicht in der Suchtabelle ST verzeichnete Sektoren befinden sich weiterhin in dem Speicherblock SB und sind hier mit G gekennzeichnet.

In Fig. 4 ist die Zusammenführung eines Speicherblocks SB mit einem Ausweichblock AB zu einem neuen Speicherblock NB dargestellt. Die veränderten Sektoren, die im Ausweichblock AB verzeichnet sind, werden in die entsprechenden Sektoren im neuen Speicherblock NB kopiert. Die restlichen Sektoren werden aus dem originären Speicherblock SB in den neuen Speicherblock NB kopiert. Dieser enthält damit nur gültige Sektoren, hier mit G gekennzeichnet.

### Bezugszeichen

- AB: Ausweichblock
- FF: höchster Wert
- G: Gültiger Sektor
- IT: Indextabelle
- LA: Logische Adresse
- LBA: Logische Blockadresse
- LSA: Logische Sektoradresse
- NB: Neuer Speicherblock
- RBA: Reale Blockadresse
- RSA: Reale Sektoradresse
- SB: Speicherblock
- SF: Strategiemerker
- ST: Suchtabelle
- X: ungültiger Sektor
- ZT: Zuordnertabelle

## Patentansprüche

1. Verfahren zum Schreiben von Speichersektoren in einzeln löschbaren Speicherblöcken (SB), die eine Vielzahl von Speichersektoren enthalten, wobei auf die realen Sektoren jeweils mittels einer Zuordnertabelle (ZT) zur Adressumsetzung von einer logischen Adresse (LA) in eine reale Blockadresse (RBA) und eine reale Sektoradresse (RSA) zugegriffen wird, **dadurch gekennzeichnet, dass** Speicherblöcke als Ausweichblöcke reserviert sind und für den jeweils zu beschreibenden Speicherblock ein Ausweichblock zugeordnet ist und , wenn ein Sektorschreibbefehl auszuführen wäre, der einen bereits beschriebenen Sektor betrifft, durch eine geänderte Adressumsetzung in den zugeordneten Ausweichspeicherblock (AB) geschrieben wird, und die Schreibvorgänge von Sektoren nacheinander in nebeneinander liegende Sektoren des Ausweichspeicherblocks (AB) erfolgen, unabhängig davon ob die Schreibvorgänge sich auf nebeneinander liegende Sektoren beziehen, wodurch ein Ausweichblock mehrere Schreibvorgänge für denselben Sektor speichern kann, und die Position des jeweiligen Sektors im Ausweichblock in einer Sektortabelle gespeichert wird.

2. Verfahren nach Anspruch 1, **dadurch gekennzeichnet, dass** die geänderte Adressumsetzung über einen Datensatz mit realer Blockadresse (RBA) und Sektortabelle im internen Merkspeicher eines Speichercontrollers erfolgt.

3. Verfahren nach Anspruch 1, **dadurch gekennzeichnet, dass** die Sektortabelle als Indextabelle (IT) aufgebaut ist, wobei die reale Sektoradresse (RSA) als Index dient und an der jeweiligen Tabellenposition die gültige Sektorposition im Ausweichblock (AB) angegeben ist.

4. Verfahren nach Anspruch 3, **dadurch gekennzeichnet, dass** ein höchstmöglicher Wert in der Indextabelle (IT) zu einer Sektoradresse (RSA) angibt, dass der zugehörige Sektor unverändert im ursprünglichen Speicherblock (SB) steht.

5. Verfahren nach Anspruch 1, **dadurch gekennzeichnet, dass** die Sektortabelle als Suchtabelle (ST) aufgebaut ist, wobei in jedem Tabelleneintrag die reale Sektoradresse (RSA) mit der jeweiligen gültigen Sektorposition im Ausweichblock (AB) angegeben ist.

6. Verfahren nach Anspruch 5, **dadurch gekennzeichnet, dass** die Suchtabelle (ST) nach realen Sektoradressen (RSA) geordnet ist.

7. Verfahren nach Anspruch 1, **dadurch gekennzeichnet, dass** die Position des Sektors im Ausweichblock (AB) auch im Verwaltungsbereich des Sektors mit gespeichert wird.

8. Verfahren nach Anspruch 7, **dadurch gekennzeichnet, dass** die Sektortabelle eines Blocks beim Wiederanlauf des Speichersystems aus den im Verwaltungsbereich gespeicherten Sektorpositionen erneut aufgebaut wird.

9. Verfahren nach Anspruch 8, **dadurch gekennzeichnet, dass** bei mehrfachem Auftreten einer Sektorposition die Position mit der höchsten Positionsnummer in die Sektortabelle übernommen wird.

10. Verfahren nach Anspruch 3, **dadurch gekennzeichnet, dass** ein Speicherblock 256 Sektoren enthält und die zugehörige Indextabelle (IT) 256 Byte lang ist.

11. Verfahren nach Anspruch 5, **dadurch gekennzeichnet, dass** ein Speicherblock 256 Sektoren enthält und die zugehörige Suchtabelle (ST) 32 Byte lang ist.

12. Verfahren nach Anspruch 1, **dadurch gekennzeichnet, dass**, sobald die Sektortabelle gefüllt ist, ein neuer Ausweichblock gesucht wird und in diesen die gültigen Sektoren aus dem originären Speicherblock und aus dem bisherigen Ausweichblock zusammenkopiert werden.

13. Verfahren nach Anspruch 12, **dadurch gekennzeichnet, dass** der neue Ausweichblock in der Zuordnertabelle als originärer Speicherblock eingetragen wird und die bisherigen Speicher- und Ausweichblöcke zum Löschen freigegeben werden.

14. Verfahren nach Anspruch 1, **dadurch gekennzeichnet, dass** in der Zuordnertabelle zu jeder logischen Blockadresse ein Strategiemerker mitgeführt wird, der angibt, ob für diese eine Sektormaske oder eine Sektortabelle zuletzt genutzt wurde.

15. Verfahren nach Anspruch 14, **dadurch gekennzeichnet, dass** der Strategiemerker mit der Angabe "Sektormaske" initialisiert wird.

16. Verfahren nach Anspruch 15, **dadurch gekennzeichnet, dass** bei einer Formatierung des Speichersystems als FAT-Filesystem die Strategiemerker der Speicherblöcke für die FAT mit der Angabe "Sektortabelle" initialisiert werden.

17. Verfahren nach Anspruch 14, **dadurch gekennzeichnet, dass**, falls nur wenige Sektoren im Ausweichblock geschrieben wurden und einer dieser Sektoren nochmals geschrieben werden soll, der Strategiemerker des Ausweichblocks auf "Sektortabelle" eingestellt wird.

## Claims

1. Method for writing memory sectors in individually-deletable memory blocks (SB), comprising a number of memory sectors, whereby access to the physical sectors is achieved by means of an allocation table (ZT) for address conversion of a logical address (LA) into a physical block address (RBA) and a physical sector address (RSA), and **characterized in that**
memory blocks are reserved as alternative blocks and that one alternative block is allocated for each sector block that is to be written, and
when a sector write command is to be carried out, which relates to an already written sector, the writing takes place to an alternative memory block (AB) by means of an altered address conversion, and
the writing processes for sectors in the alternative memory block are carried out sequentially to adjacent sectors of the alternative memory block (AB), regardless of whether the writing processes concern adjacent sectors, so one alternative block can store several writing processes for one sector,
and the position of the relevant sector in the alternative block (AB) is stored in a sector table.

2. Method according to claim 1, **characterized in that** the altered address conversion is carried out by means of a data record with a physical block address (RBA) and a sector table in the internal storage of a memory controller.

3. Method according to claim 1, **characterized in that** the sector is organized as an index table (IT), wherein the physical sector address (RSA) serves as an index and the valid sector position in the alternative block (AB) is indicated at the corresponding position in the table.

4. Method according to claim 3, **characterized in that** a highest possible value assigned to a sector address (RSA) in the index table (IT) indicates that the corresponding sector remains unchanged in the original memory block (SB).

5. Method according to claim 1, **characterized in that** the sector table is organized as a search table (ST), each table entry of which indicates the physical sector address (RSA) with the corresponding valid sector position in the alternative block (AB).

6. Method according to claim 5, **characterized in that** the search table (ST), is sorted by physical sector addresses (RSA).

7. Method according to claim 1, **characterized in that** the position of the sector within the alternative block (AB) is also stored in the administrative part of the sector.

8. Method according to claim 7, **characterized in that** the sector table of a block is reconstructed from the sector positions stored in the administrative part when the memory system is restarted.

9. Method according to claim 8, **characterized in that** the sector position with the highest item number is registered in the sector table.

10. Method according to claim 3, **characterized in that** a memory block contains 256 sectors and the corresponding index table (IT) has 256 byte.

11. Method according to claim 5, **characterized in that** a memory block contains 256 sectors and the corresponding search table (ST) has 32 byte.

12. Method according to claim 1, **characterized in that**, as soon as the sector table is filled, a new alternative block is searched for, to which the valid sectors from the original memory block, together with those from the previous alternative block, are then copied.

13. Method according to claim 12, **characterized in that** the new alternative block is registered in the allocation table as the original memory block and the previous memory- and alternative blocks are cleared for deletion.

14. Method according to claim 1, **characterized in that** in the allocation table a strategy indicator is carried along with each logical block address, indicating whether a sector mask or a sector table have last been used for the latter.

15. Method according to claim 14, **characterized in that** the strategy indicator is initialised with the remark "sector mask".

16. Method according to claim 15, **characterized in that** if the memory system is formatted as a FAT file system, the strategy indicators of the memory blocks are initialised with the remark "sector table" for the FAT.

17. Method according to claim 14, **characterized in that** if only a few sectors have been written to the alternative block system, and one of these blocks is to be rewritten, the strategy indicator of the alternative block is switched to "sector table".

## Revendications

1. Méthode pour écrire des secteurs de mémoire dans des blocs de mémoire (SB) individuellement supprimables, comprenant de nombreux secteurs de mémoire, selon laquelle l'accès aux secteurs physiques est réalisé au moyen d'une table d'allocation (ZT) pour la conversion d'une adresse logique (AL) en une adresse de bloc physique (RBA) et une adresse de secteur physique (RSA), et caractériséee en ce que
des blocs de mémoire sont réservés en tant que blocs alternatifs et un bloc alternatif est alloué pour chaque bloc de mémoire qui doit être écrit, et quand une commande d'écriture de secteur devrait être effectuée dans un secteur déjà écrit, le processus d'écriture est effectué dans un bloc de mémoire alternatif (AB) au moyen d'une conversion d'adresse modifiée,
et les processus d'écriture des secteurs sont effectués séquentiellement dans des secteurs adjacents du bloc de mémoire alternatif (AB), que les processus d'écriture concernent des secteurs adjacents ou non adjacents, alors un bloc alternatif peut stocker plusieurs processus d'écriture pour un seul secteur,
et la position du secteur concerné dans le bloc alternatif (AB) est enregistrée dans une table de secteur.

2. Méthode selon la revendication 1, **caractérisée en ce que** la conversion d'adresse modifiée est effectuée dans le stockage interne d'un contrôleur mémoire au moyen d'un enregistrement de données avec une adresse de bloc physique (RBA) et une table de secteur.

3. Méthode selon la revendication 1, **caractérisée en ce que** la table de secteur est organisé en tant que table d'index (TI), dans laquelle l'adresse de secteur physique (RSA) sert d'index et la position valable du secteur dans le bloc alternatif (AB) est indiqué à la position correspondante dans la table.

4. Méthode selon la revendication 3, **caractérisée en ce que** la valeur la plus élevée possible assignée à une adresse de secteur (RSA) dans la table d'index (TI) indique que le secteur correspondant reste inchangé dans le bloc de mémoire original (SB).

5. Méthode selon la revendication 1, **caractérisée en ce que** la table de secteur est organisé en tant que table de recherche (ST), dans laquelle l'adresse de secteur physique (RSA) avec la position valable du secteur dans le bloc alternatif (AB) correspondante est indiquée dans chaque entrée de la table.

6. Méthode selon la revendication 5, **caractérisée en ce que** la table de recherche (ST) est triée par adresse de secteur physique (RSA).

7. Méthode selon la revendication 1, **caractérisée en ce que** la position du secteur dans le bloc alternatif (AB) est également stockée dans la partie administrative de ce secteur.

8. Méthode selon la revendication 7, **caractérisée en ce que**, lorsque le système de mémoire est redémarré, la table de secteur d'un bloc est reconstruite à partir des positions du secteur stockées dans la partie administrative.

9. Méthode selon la revendication 8, **caractérisée en ce que** la position du secteur avec le numéro de position le plus élevé est enregistrée dans la table de secteur.

10. Méthode selon la revendication 3, **caractérisée en ce qu'**un bloc de mémoire contient 256 secteurs et la table d'index correspondante (TI) a 256 octets.

11. Méthode selon la revendication 5, **caractérisée en ce qu'**un bloc de mémoire contient 256 secteurs et la table de recherche correspondante (ST) a 32 octets.

12. Méthode selon la revendication 1, **caractérisée en ce que**, dès que la table de secteur est remplie, un nouveau bloc alternatif est recherché, dans lequel les secteurs valables du bloc de mémoire original, ainsi que ceux du bloc alternatif précédent, sont copiés ensemble.

13. Méthode selon la revendication 12, **caractérisée en ce que** le nouveau bloc alternatif est enregistré dans la table d'allocation en tant que bloc de mémoire original, et les blocs de mémoire et blocs alternatives précédents sont désignés à être supprimés.

14. Méthode selon la revendication 1, **caractérisée en ce que** dans la table d'allocation d'un indicateur stratégique est réalisé pour chaque adresse de bloc logique, indiquant si un masque de secteur ou une table de secteur ont été utilisés dernièrement pour celui-ci.

15. Méthode selon la revendication 14, **caractérisée en ce que** l'indicateur stratégique est initialisée avec la remarque «masque de secteur».

16. Méthode selon la revendication 15, **caractérisée en ce que** si le système de mémoire est formatée comme un système de fichiers FAT, les indicateurs stratégiques des blocs de mémoire sont initialisés avec la remarque «table de secteur» pour la FAT.

17. Méthode selon la revendication 14, **caractérisée en ce que**, si seulement peu de secteurs ont été écrits dans le bloc alternatif, et l'un de ces secteurs doit être réécrit, l'indicateur stratégique du bloc alternatif est changé à «table de secteur».
